# EUROPEAN PATENT APPLICATION

(11) **EP 4 763 561 A1**
(43) Date of publication of application: **24.06.2026**
(21) Application number: 25215173.3
(22) Date of filing: 12.11.2025
(51) Int. Cl.: B60K 1/04

(54) **BATTERY PACK AND VEHICLE LOWER PART STRUCTURE EQUIPPED WITH SAME**

(30) Priority: 20.12.2024 JP 2024225705
(71) Applicant: Toyota Jidosha Kabushiki Kaisha, Toyota-shi, Aichi-ken 471-8571 (JP)
(72) Inventor: NISHIKI, Nobuyasu, Toyota-shi, 471-8571 (JP)
(74) Representative: TBK

(57) **Abstract**

A battery pack 20 includes a battery 21, a case 22 that houses the battery 21, and plural connectors 24, 25, 26, 27. When a specific direction among directions orthogonal to a vehicle vertical direction is defined as a first direction, each of the plural connectors 24, 25, 26, 27 protrudes from the case 22 toward the side of the first direction.

## Description

### BACKGROUND

### Technical Field

The present disclosure relates to a battery pack and to a vehicle lower part structure equipped with the same.

### Background Art

Patent Document 1 discloses a battery pack that is installed at a lower side of a vehicle cabin and a vehicle lower part structure that is equipped with the same.

### Prior Art Documents

### Patent Documents

Patent Document 1: Japanese Patent Application Laid-open No. 2020-131971

### SUMMARY

An object of the present disclosure is to reduce structural portions protruding from a case toward a vehicle upper direction side in a battery pack installed at a lower side of a vehicle cabin.

Another object of the present disclosure is to suppress the occurrence of malfunctions at the time of a vehicle collision in a vehicle lower part structure equipped with a battery pack installed at a lower side of a vehicle cabin.

### (Battery Pack)

A battery pack according to a first aspect is installed at a lower side of a vehicle cabin, the battery pack including: a battery; a case housing the battery; and plural connectors, in which, when a specific direction among directions orthogonal to a vehicle vertical direction is a first direction, each of the plural connectors protrudes from the case toward a side of the first direction.

The present aspect relates to a battery pack installed at a lower side of the vehicle cabin. The battery pack is provided with a battery, a case that houses the battery, and plural connectors. When a specific direction among directions orthogonal to the vehicle vertical direction is designated as a first direction, each of the plural connectors protrudes from the case toward the first direction side.

Therefore, compared to an aspect in which each of the plural connectors protrudes from the case toward the vehicle upper direction side, structural portions protruding from the case toward the vehicle upper direction side can be reduced.

Here, in the embodiment described below, the first direction is the vehicle front direction; however, the first direction in the present embodiment is not limited to this. For example, the first direction may be the vehicle rear direction, the vehicle right direction, or the vehicle left direction.

Here, in the embodiment described below, as connectors provided in the battery pack, only connectors that protrude from the case toward the first direction side are explained. However, the battery pack of the present aspect may or may not include a connector other than connectors protruding from the case toward the first direction side. In particular, the battery pack of the present aspect may include a connector protruding from the case toward the vehicle upper direction side in addition to the connectors protruding from the case toward the first direction side. Since "each of the plural connectors" of the present aspect protrudes from the case toward the first direction side, compared to an aspect in which "each of the plural connectors" protrudes from the case toward the vehicle upper direction side, structural portions protruding from the case toward the vehicle upper direction side can be reduced.

A battery pack according to a second aspect is the first aspect, in which: the plural connectors include a first connector that is in a non-energized state during vehicle travel, and the first connector protrudes further toward the side of the first direction than any connector, other than the first connector, among the plural connectors.

Incidentally, in a battery pack provided with a structure in which each of the plural connectors protrudes from the case toward the first direction side, when the battery pack moves in the first direction relative to the vehicle body as a result of inertia at the time of a vehicle collision, there is a risk that the plural connectors will strongly contact the framework member of the vehicle body, and malfunctions such as short circuits will occur.

Here, in the present aspect, the plural connectors include a first connector that is in a non-energized state while the vehicle is traveling, and the first connector protrudes further toward the first direction side than any connector, other than the first connector, among the plural connectors.

Therefore, when the battery pack moves in the first direction relative to the framework member of the vehicle body as a result of inertia at the time of a vehicle collision, the first connector is likely to contact the framework member first. As a result, it is possible to suppress strong contact between the other connectors and the framework member, and the occurrence of malfunctions such as short circuits can be suppressed. Here, since the first connector is a connector that is in a non-energized state while the vehicle is traveling, there are no concerns regarding short circuits or the like even if the first connector is sandwiched and crushed between the framework member and the case.

A battery pack according to a third aspect is the first aspect, in which: the first direction is a vehicle front direction or a vehicle rear direction, the plural connectors include plural extra-area connectors disposed outside a vehicle width direction central region in a state in which the battery pack is installed in a vehicle, the plural extra-area connectors include a first connector that is in a non-energized state during vehicle travel, and the first connector protrudes further toward the side of the first direction than any extra-area connector, other than the first connector, among the plural extra-area connectors.

In the present aspect, the first direction is a vehicle forward direction or a vehicle rearward direction, and the plural connectors include plural extra-area connectors that are arranged outside a central region in the vehicle width direction in a state in which the battery pack is installed in the vehicle.

Therefore, in a case in which the vehicle in which the battery pack is installed is provided with a pair of cross members provided at respective sides in the vehicle width direction with a central region in the vehicle width direction sandwiched therebetween, and the battery pack is installed at an opposite side of the pair of cross members from the first direction, the plural extra-area connectors are positioned at positions at which they can contact a cross member when the battery pack moves in a first direction relative to the cross member as a result of inertia at the time of a vehicle collision.

Here, in the present aspect, the plural extra-area connectors include a first connector that is in a non-energized state while the vehicle is traveling, and the first connector protrudes further toward the first direction side than any extra-area connector, other than the first connector, among the plural extra-area connectors.

Therefore, when the battery pack moves in the first direction relative to the framework member of the vehicle body as a result of inertia at the time of a vehicle collision, the first connector is likely to contact the framework member first. As a result, it is possible to suppress strong contact between the other extra-area connectors and the framework member, and the occurrence of malfunctions such as short circuits can be suppressed.

### (Vehicle Lower Part Structure)

A vehicle lower part structure according to a fourth aspect includes: the battery pack of any of the first to third aspects; and a framework member, in which: the plural connectors include plural opposing connectors provided at a position at which the plural opposing connectors can contact the framework member when the battery pack moves relative to the framework member in the first direction as a result of inertia at a time of a vehicle collision, the plural opposing connectors include a first connector that is in a non-energized state during vehicle travel, and the first connector is closer to the framework member in the first direction than any opposing connector, other than the first connector, among the plural opposing connectors.

The present aspect relates to a vehicle lower part structure. The vehicle lower part structure is provided with a framework member, and a battery pack installed at a lower side of a vehicle cabin. The battery pack is provided with a battery, a case that houses the battery, and plural connectors. Further, when a specific direction among directions orthogonal to the vehicle vertical direction is designated as a first direction, each of the plural connectors protrudes from the case toward the first direction side.

Further, in the present aspect, the plural connectors include plural opposing connectors. The opposing connectors are connectors that are provided at positions at which they can contact the framework member when the battery pack moves in the first direction relative to the framework member as a result of inertia at the time of a vehicle collision.

However, in a case in which the plural connectors include these opposing connectors, there is a risk that the opposing connectors will strongly contact the framework member at the time of a vehicle collision, and malfunctions such as short circuits will occur.

Here, in the present aspect, the plural opposing connectors include a first connector that is in a non-energized state while the vehicle is traveling, and the first connector is closer to the framework member in the first direction than any of the opposing connectors, other than the first connector, among the plural opposing connectors.

Therefore, when the battery pack moves in the first direction relative to the framework member as a result of inertia at the time of a vehicle collision, the first connector will hit the framework member first. As a result, it is possible to suppress strong contact between the other opposing connectors and the framework member, and the occurrence of malfunctions such as short circuits can be suppressed.

Here, in the embodiment described below, the vehicle lower part structure is a vehicle lower part structure for a plug-in hybrid electric vehicle (PHEV); however, the present aspect is not limited to this. The vehicle lower part structure may be a vehicle lower part structure of a battery electric vehicle (BEV).

Here, in the embodiment described below, a first connector among plural opposing connectors is provided at a position at which it contacts the framework member (cross member main body portion) when it moves in parallel with the first direction. Further, among the plural opposing connectors, the opposing connectors other than the first connector are not provided in a position at which they contact the framework member (cross member extension portion) when they move in parallel with the first direction, and are provided at positions at which they contact the framework member when they move slightly diagonally upward toward the first direction. This kind of opposing connector also can be said to be "provided at a position at which the plural opposing connectors can contact the framework member when the battery pack moves relative to the framework member in the first direction as a result of inertia at a time of a vehicle collision".

Here, in the embodiment described below, the plural connectors include a connector that is not an opposing connector (a non-opposing connector), and the non-opposing connector is a connector that is connected to a drive motor via an inverter. However, the present aspect is not limited to this. For example, the plural connectors do not need to include a non-opposing connector. Further, for example, in a case in which the plural connectors include a non-opposing connector, the non-opposing connector does not need to be a connector that is connected to a drive motor.

Here, in the embodiment described below, each of the plural connectors is provided with a pack-side connector fixed to the case, and a vehicle-side connector connected to the pack-side connector and also fixed to a leading end of a cable. Here, while the pack-side connector is a component of the battery pack, it would be possible to consider the vehicle-side connector as not being a component of the battery pack. However, at least in the present aspect, the vehicle-side connector is also considered to be a component of the battery pack.

A vehicle lower part structure according to a fifth aspect is the fourth aspect, in which the first connector is a DC charging connector.

In the present aspect, the first connector is a DC charging connector.

Therefore, it is possible to suppress destruction of the first connector when the first connector contacts the framework member in the event of a vehicle collision and, as a result, inertial movement of the battery pack can be effectively suppressed. This is because a DC charging connector has a structure that can handle large currents and, therefore, is necessarily a high-strength connector.

A vehicle lower part structure of a sixth aspect is the fourth or fifth aspect, in which: the first connector comprises: a first pack-side connector fixed to the case; and a first vehicle-side connector connected to the first pack-side connector and fixed to a leading end of a cable, and the first vehicle-side connector is provided at a position at which the first vehicle-side connector would contact the framework member when it is supposed that the first vehicle-side connector moves in parallel with the first direction.

In the present aspect, the first connector is provided with a first pack-side connector fixed to the case, and a first vehicle-side connector connected to the pack-side connector and also fixed to a leading end of a cable. Here, the first vehicle-side connector is provided at a position at which it would contact the framework member when it is supposed that the first vehicle-side connector moves in parallel with the first direction.

Therefore, when the battery pack moves in the first direction relative to the framework member as a result of inertia at the time of a vehicle collision, it is likely that the first vehicle-side connector will contact the framework member. As a result, inertial movement of the battery pack can be yet more effectively suppressed.

A vehicle lower part structure according to a seventh aspect is any of the fourth to sixth aspects, in which the first direction is a vehicle front direction.

In the present aspect, the first direction is the vehicle front direction.

Therefore, the occurrence of malfunctions such as short circuits in the event of a frontal collision of the vehicle can be suppressed.

A vehicle lower part structure according to an eighth aspect is the seventh aspect, in which: the framework member includes: a first framework member extending in a vehicle front-rear direction; and a second framework member extending in a vehicle width direction, the first framework member and the second framework member are connected, and the first connector is positioned at a vehicle rearward side of a portion of the framework member at which the first framework member and the second framework member are connected.

In the present aspect, the framework member is provided with a first framework member extending in the vehicle front-rear direction and a second framework member extending in the vehicle width direction. The first framework member and the second framework member are connected to each other.

Here, the first connector is positioned at the vehicle rear side of the portion of the framework member at which the first framework member and the second framework member are connected.

Therefore, load from the first connector can be received at a portion of the framework member that has high strength.

A vehicle lower part structure according to a ninth aspect is the eighth aspect, in which: the first framework member is one of a pair of front side members having a vehicle front part extending in the vehicle front-rear direction, and the second framework member is one of a pair of cross members connected to rear ends of the pair of front side members.

In the present aspect, the first framework member is one of a pair of front side members having a vehicle front part extending in the vehicle front-rear direction, and the second framework member is one of a pair of cross members that are connected to the rear ends of the pair of front side members.

Therefore, the front side members and the cross members can be effectively utilized to suppress the occurrence of malfunctions in the event of a vehicle collision.

A vehicle lower part structure according to a tenth aspect is the seventh aspect, in which: the framework member includes: a first framework member extending in a vehicle front-rear direction; and a second framework member extending in a vehicle width direction, the first framework member and the second framework member are connected, the first framework member is one of a pair of front side members having a vehicle front part extending in the vehicle front-rear direction, and the second framework member is one of a pair of cross members connected to rear ends of the pair of front side members, the vehicle lower part structure includes an exhaust pipe, the first connector is positioned at a position that is offset from a vehicle width direction central position toward one side in the vehicle width direction, and the exhaust pipe passes between the pair of cross members and passes through a space at another side in the vehicle width direction relative to the battery pack.

In the present aspect, the vehicle lower part structure is provided with an exhaust pipe. The first connector is located at a position offset from a central position in the vehicle width direction toward one side in the vehicle width direction, and the exhaust pipe passes between the pair of cross members and also passes through a space at the other side of the battery pack in the vehicle width direction.

Therefore, in a structure provided with the exhaust pipe, the battery pack including the first connector, and the exhaust pipe, can be arranged efficiently.

Here, in the embodiment described below, the first connector is positioned at the vehicle rear side of the portion of the framework member at which the first framework member and the second framework member are connected; however, the present aspect is not limited to this. The first connector in the present aspect may be disposed at a position offset in the vehicle width direction from the portion at which the first framework member and the second framework member are connected.

A vehicle lower part structure according to an eleventh aspect is any of the fourth to tenth aspects, in which the plural connectors include a non-opposing connector in addition to the plural opposing connectors, and the non-opposing connector is a connector that is connected to a vehicle drive motor.

In the present aspect, the plural connectors include a non-opposing connector in addition to the plural opposing connectors, and the non-opposing connector is a connector that is connected to a vehicle drive motor.

Therefore, the connector connected to the vehicle drive motor can be disposed in a safer position.

As explained above, according to the present disclosure, it is possible to reduce structural portions protruding from the case toward the vehicle upper direction side in a battery pack installed at a lower side of a vehicle cabin. Further, according to the present disclosure, it is possible to suppress the occurrence of malfunctions at the time of a vehicle collision in a vehicle lower part structure provided with a battery pack installed at a lower side of a vehicle cabin.

### BRIEF DESCRIPTION OF THE DRAWINGS

[FIG. 1] Fig. 1 is a schematic bottom view of a vehicle lower part structure.
[FIG. 2] Fig. 2 is a schematic cross-sectional view of a vehicle lower part structure (cross-sectional view along line 2-2 in Fig. 1).
[FIG. 3] Fig. 3 is a cross-sectional view showing a portion of Fig. 2 in more detail.

### DETAILED DESCRIPTION

In the following, preferred embodiments of the present disclosure are explained.

Here, in the respective drawings, the arrow FR represents a vehicle frontward direction, the arrow UP represents a vehicle upward direction, and the arrow LH represents a left side in a vehicle width direction. Further, in the following explanation, in a case in which front-rear, up-down, or left-right directions are used without being specified, these represent front and rear in a vehicle front-rear direction, up and down in a vehicle vertical direction, and left and right in a vehicle width direction.

Here, in the present disclosure, a specific direction among directions orthogonal to the vehicle vertical direction may be referred to as a first direction, and the first direction in the present embodiment is the vehicle forward direction. Further, in the present disclosure, the terms "one side in the vehicle width direction" and "other side in the vehicle width direction" may be used, and in the present embodiment, one side in the vehicle width direction is the left side in the vehicle width direction, and the other side in the vehicle width direction is the right side in the vehicle width direction.

### (Vehicle Lower Part Structure 10)

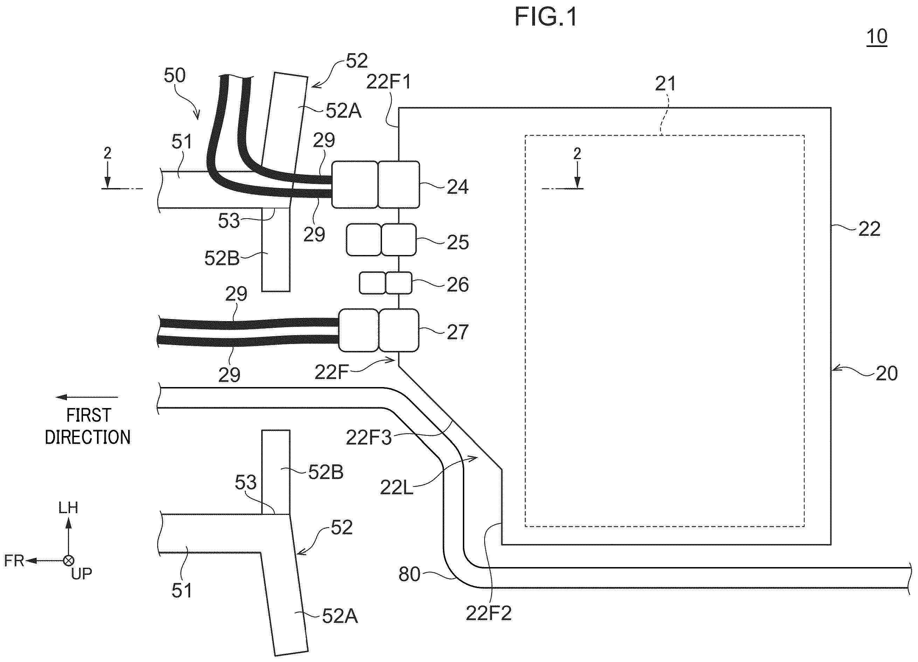

Fig. 1 is a schematic bottom view of a vehicle lower part structure 10 according to the present embodiment.

The vehicle lower part structure 10 is a vehicle lower part structure for a plug-in hybrid electric vehicle (PHEV).

The vehicle lower part structure 10 is provided with a framework member 50, a battery pack 20 installed at a lower side of a vehicle cabin 90, and an exhaust pipe 80.

### (Framework member 50)

The framework member 50 is provided with a pair of front side members 51 having a vehicle front part extending in the vehicle front-rear direction, and a pair of cross members 52 connected to rear ends of the pair of front side members 51 and extending in the vehicle width direction.

Each front side member 51 includes a front side member front part extending substantially in parallel with the vehicle front-rear direction, and a front side member rear part extending obliquely upward toward the vehicle forward direction. In the respective drawings, only the rear part of the front side member 51 is shown.

A gap is provided in the vehicle width direction between the cross member 52 at one side in the vehicle width direction and the cross member 52 at the other side in the vehicle width direction. Each cross member 52 has a cross member main body part 52A and a cross member extension part 52B.

The cross member main body part 52A is connected to a rear end part of the front side member 51. The cross member main body part 52A extends outward in the vehicle width direction from the rear end part of the front side member 51. The direction of extension of the cross member main body part 52A is a direction that is slightly inclined toward the vehicle rear side on progression outward in the vehicle width direction. An outer part in the vehicle width direction of the cross member main body part 52A is connected to a front end part of a rocker (not shown). The rocker is a framework member extending in the front-rear direction of the vehicle at an outer side end part in the vehicle width direction.

The cross member extension part 52B extends substantially in parallel with the vehicle width direction inward from a vehicle width direction inner end part of the cross member main body part 52A.

A lower surface of the cross member extension part 52B is provided further toward a vehicle upper side than a lower surface of the cross member main body part 52A. In other words, the protrusion amount of the cross member extension part 52B toward the vehicle lower side is smaller than the protrusion amount of the cross member main body part 52A toward the vehicle lower side. A step part 53 is formed between the lower surface of the cross member extension part 52B and the lower surface of the cross member main body part 52A.

Here, at the connection point between the lower surface of the cross member main body 52A and the lower surface of the front side member 51, compared to the connection between the lower surface of the cross member main body part 52A and the lower surface of the cross member extension part 52B, the lower surfaces are connected smoothly.

### (Battery Pack 20)

The battery pack 20 includes a battery 21, a case 22 that houses the battery 21, and plural connectors 24, 25, 26, 27.

### (Battery 21)

While not shown in the drawings, the battery 21 includes plural battery modules. Each battery module includes plural battery cells. The stacking direction of the plural battery cells is, for example, the vehicle front-rear direction or the vehicle width direction.

### (Case 22)

The case 22 has a recessed part 22L at the front of the case 22 and at the other side in the vehicle width direction (the right side in the vehicle width direction). In other words, a front wall part 22F of the case 22 has a general front wall part 22F1 extending in the vehicle width direction, and rearward front wall portions 22F2, 22F3 located further to a vehicle rearward side than the general front wall part 22F1. At the position at which the rearward front wall portions 22F2, 22F3 are formed, the case 22 is configured such that the front wall part 22F of the case 22 is recessed toward the vehicle rearward side.

More specifically, the rear front wall portions 22F2, 22F3 have a first rearward front wall part 22F2 extending in the vehicle width direction, and a second rearward front wall part 22F3 that diagonally connects the general front wall part 22F1 and the first rearward front wall part 22F2.

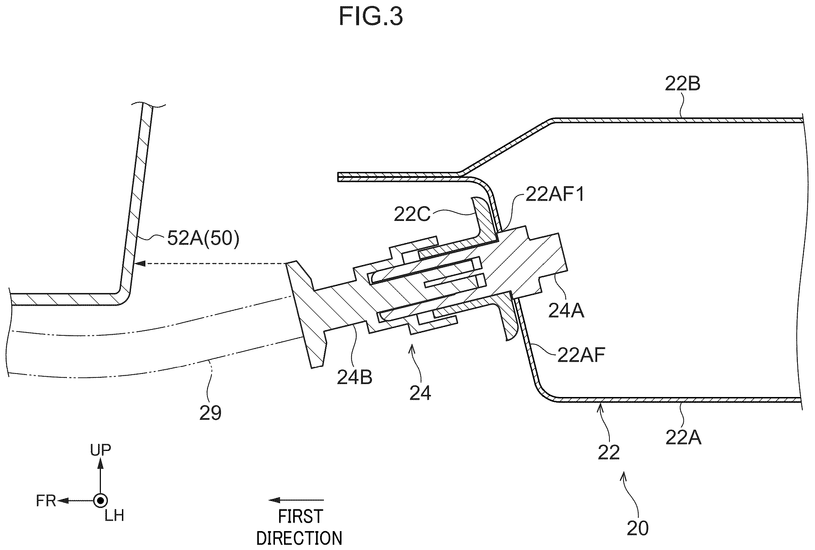

As shown in Fig. 3, the case 22 is provided with a lower case 22A and an upper case 22B.

The lower case 22A has a front wall part 22AF in which an opening 22AF1 is formed. A connector block 22C is joined from the outside of the case 22 to a position at which the opening 22AF1 is formed in the front wall part 22AF of the lower case 22A. The connector block 22C is a die-cast product made of aluminum or the like.

### (Plural Connectors 24, 25, 26, 27)

As shown in Fig. 1, each of the plural connectors 24, 25, 26, 27 protrudes from the case 22 toward the first direction side. Specifically, the plural connectors 24, 25, 26, 27 protrude from the front wall part 22AF (see Fig. 3) of the lower case 22A that configures part of the first direction side wall (front wall part 22F) of the case 22 toward the vehicle front direction side that is the first direction side.

The plural connectors 24, 25, 26, 27 are, as a whole, disposed at positions offset toward the one side (left side) in the vehicle width direction with respect to a center position in the vehicle width direction. The plural connectors 24, 25, 26, 27 protrude from the general front wall part 22F1 of the front wall part 22F of the case 22 toward the first direction side. The plural connectors 24, 25, 26, 27 include a first connector 24, a second connector 25, a third connector 26, and a fourth connector 27.

The first connector 24 is a DC charging connector used for rapid charging. Accordingly, the first connector 24 is in a non-energized state while the vehicle is traveling. The first connector 24 is located at the vehicle rear side of (directly behind) a portion at which the front side member 51 at the one side in the vehicle width direction and the cross member 52 at the one side in the vehicle width direction are connected.

The second connector 25 is a connector for communication. The second connector 25 functions to connect a battery ECU in the case 22 to an ECU provided at the side of the vehicle body. The second connector 25 is a low voltage connector. The second connector 25 is located on the other side in the vehicle width direction (on the right side in the vehicle width direction) with respect to the first connector 24.

The third connector 26 is, for example, an AC charging connector. The AC charging connector is used for charging using, for example, a household power source. The third connector 26 is located on the other side in the vehicle width direction (on the right side in the vehicle width direction) with respect to the first connector 24.

The fourth connector 27 is a connector that is connected to a vehicle drive motor via an inverter (not shown). The inverter and the vehicle drive motor are provided further toward the vehicle forward side than the pair of cross members 52. The fourth connector 27 is located on the other side in the vehicle width direction (on the right side in the vehicle width direction) with respect to the first connector 24.

The first connector 24 protrudes further toward the first direction side than any of the second connector 25, third connector 26, and fourth connector 27, which are the connectors 25, 26, 27 excluding the first connector 24 among the plural connectors 24, 25, 26, 27.

The plural connectors 24, 25, 26, 27 can be classified as an intra-area connector 27 and extra-area connectors 24, 25, 26.

The intra-area connector is a connector that is disposed in a central area in the vehicle width direction in a state in which the battery pack 20 is installed in the vehicle. In the present embodiment, the vehicle width direction central area refers to a region corresponding to an area between the pair of cross members 52 in the vehicle width direction.

The extra-area connectors are connectors that are disposed outside the central area in the vehicle width direction in a state in which the battery pack 20 is installed in the vehicle.

In the present embodiment, the first connector 24, the second connector 25, and the third connector 26 are extra-area connectors, and the fourth connector 27 is an intra-area connector.

The plural extra-area connectors 24, 25, 26 are positioned approximately directly behind the one of the pair of cross members 52 at the one side in the vehicle width direction. Therefore, it can be said that the plural extra-area connectors 24, 25, 26 are provided at positions at which they can contact the framework member 50 when the battery pack 20 moves in the first direction relative to the framework member 50 as a result of inertia at the time of a vehicle collision. In the following, the plural extra-area connectors 24, 25, 26 may be referred to as plural opposing connectors 24, 25, 26.

The first connector 24 protrudes toward the first direction side further than any of the opposing connectors 25, 26 excluding the first connector 24 among the plural opposing connectors 24, 25, 26. As a result, the first connector 24 is closer to the framework member 50 in the first direction than any of the opposing connectors 25, 26 excluding the first connector 24 among the plural opposing connectors 24, 25, 26.

The fourth connector 27, which is the intra-area connector 27, overlaps with a position between the pair of cross members 52 in the vehicle width direction. That is, the fourth connector 27, which is the intra-area connector 27, does not oppose the framework member 50 in the first direction. In the following, the fourth connector 27, which is the intra-area connector 27, may be referred to as a non-opposing connector 27.

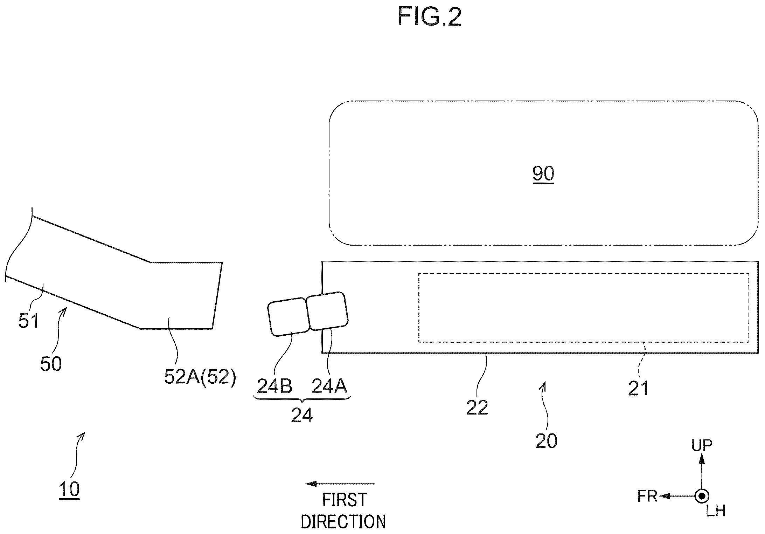

As shown in Fig. 2 and Fig. 3, the first connector 24 is provided with a first pack-side connector 24A fixed to the case 22, and a first vehicle-side connector 24B connected to the first pack-side connector 24A and fixed to the leading end of a cable 29.

Here, as shown in Fig. 1, the other connectors 25, 26, 27 are also provided with a first pack-side connector fixed to the case 22, and a first vehicle-side connector connected to the first pack-side connector and fixed to the leading end of a cable 29 (not all shown). However, in Fig. 1, the individual reference numerals are omitted.

The first pack-side connector 24A is disposed so as to penetrate a part (front wall part 22AF) of the front wall part 22F of the case 22.

The first vehicle-side connector 24B is attached to an end of the cable 29 and is connected to the first pack-side connector 24A. Here, a rubber boot (not shown) is attached at a boundary position between the cable 29 and the first vehicle-side connector 24B.

The axial direction of the first connector 24 is oriented in a direction slightly inclined toward a vehicle lower side on progression toward the vehicle front side. The axial direction of the first connector 24 coincides with the connection direction between the first pack-side connector 24A and the first vehicle-side connector 24B. Further, the first vehicle-side connector 24B is provided at a position at which the first vehicle-side connector 24B would contact the framework member 50 when it is supposed that the first vehicle-side connector 24B moves in parallel with the first direction (see the dashed arrow in Fig. 3).

Here, while not shown in the drawings, the first connector 24 is a connector having a shielding structure. Specifically, the first pack-side connector 24A and the first vehicle-side connector 24B each include a central conductor part and a substantially cylindrical shielding conductor part surrounding the central conductor portion.

### (Exhaust Pipe 80)

The exhaust pipe 80 conveys exhaust gas discharged from an engine installed in the vehicle. The engine is positioned further toward a vehicle forward side than the pair of cross members 52 in the vehicle.

As shown in Fig. 1, the exhaust pipe 80 passes between the pair of cross members 52 and also passes through a space at the other side of the battery pack 20 in the vehicle width direction. Further, the exhaust pipe 80 is disposed so as to pass through the recessed part 22L of the case 22 of the battery pack 20.

### <Mechanism and Effects>

Next, the mechanism and effects of the present exemplary embodiment are explained.

### (Battery Pack 20)

In the present embodiment, as shown in Fig. 2, the battery pack 20 is installed at a lower side of the vehicle cabin 90. As shown in Fig. 1, the battery pack 20 includes a battery 21, a case 22 that houses the battery 21, and plural connectors 24, 25, 26, 27. When a specific direction among directions orthogonal to the vehicle vertical direction is referred to as a first direction, each of the plural connectors 24, 25, 26, 27 protrudes from the case 22 toward the first direction side.

Therefore, compared to an aspect in which each of the plural connectors 24, 25, 26, 27 protrudes from the case 22 toward a vehicle upper direction side, structural portions protruding from the case 22 toward the vehicle upper direction side can be reduced.

Incidentally, in the battery pack 20 provided with a structure in which each of the plural connectors 24, 25, 26, 27 protrudes from the case 22 toward the first direction side, when the battery pack 20 moves in the first direction relative to the vehicle body as a result of inertia at the time of a vehicle collision, there is a risk that the plural connectors 24, 25, 26, 27 will strongly contact the framework member 50 of the vehicle body, and malfunctions such as short circuits will occur.

Here, in the present embodiment, as shown in Fig. 1, the plural connectors 24, 25, 26, 27 include a first connector 24 that is in a non-energized state while the vehicle is traveling, and the first connector 24 protrudes toward the first direction side further than any of the connectors 25, 26, 27, excluding the first connector 24, among the plural connectors 24, 25, 26, 27.

Therefore, when the battery pack 20 moves in the first direction relative to the framework member 50 of the vehicle body as a result of inertia at the time of a vehicle collision, the first connector 24 is likely to contact the framework member 50 first. As a result, it is possible to suppress strong contact between the other connectors 25, 26, 27 and the framework member 50, and the occurrence of malfunctions such as short circuits can be suppressed. Here, since the first connector 24 is a connector that is in a non-energized state while the vehicle is traveling, there are no concerns regarding short circuits or the like even if the first connector 24 is sandwiched and crushed between the framework member 50 and the case 22.

Further, in the present embodiment, as shown in Fig. 1, the first direction is a vehicle forward direction or a vehicle rearward direction, and the plural connectors 24, 25, 26, 27 include plural extra-area connectors 24, 25, 26 that are arranged outside a central region in the vehicle width direction when the battery pack 20 is installed in the vehicle.

Therefore, as shown in Fig. 1, the vehicle in which the battery pack 20 is installed is provided with a pair of cross members 52 provided at respective sides in the vehicle width direction with a central region in the vehicle width direction sandwiched therebetween, and in a case in which the battery pack 20 is installed at an opposite side of the pair of cross members 52 from the first direction, the plural extra-area connectors 24, 25, 26 are disposed at positions at which they can contact the cross member 52 when the battery pack 20 moves in the first direction relative to the cross member 52 as a result of inertia at the time of a vehicle collision.

Here, in the present embodiment, the plural extra-area connectors 24, 25, 26 include a first connector 24 that is in a non-energized state while the vehicle is traveling, and the first connector 24 protrudes toward the first direction side further than any of the extra-area connectors 25, 26, excluding the first connector 24, among the plural extra-area connectors 24, 25, 26.

Therefore, when the battery pack 20 moves in the first direction relative to the framework member 50 of the vehicle body as a result of inertia at the time of a vehicle collision, the first connector 24 is likely to contact the framework member 50 first. As a result, it is possible to suppress strong contact between the other extra-area connectors 25, 26 and the framework member 50, and the occurrence of malfunctions such as short circuits can be suppressed.

### (Vehicle Lower Part Structure 10)

Further, in the present embodiment, as shown in Fig. 1, the present invention relates to a vehicle lower part structure 10. The vehicle lower part structure 10 is provided with a framework member 50, and a battery pack 20 installed at a lower side of a vehicle cabin 90. The battery pack 20 includes a battery 21, a case 22 that houses the battery 21, and plural connectors 24, 25, 26, 27. Further, when a specific direction among directions orthogonal to the vehicle vertical direction is referred to as the first direction, each of the plural connectors 24, 25, 26, 27 protrudes from the case 22 toward the first direction side.

Further, in the present embodiment, as shown in Fig. 1, the plural connectors 24, 25, 26, 27 include plural opposing connectors 24, 25, 26. The opposing connectors 24, 25, 26 are connectors that are provided at positions at which they can contact the framework member 50 when the battery pack 20 moves in the first direction relative to the framework member 50 as a result of inertia at the time of a vehicle collision.

However, in a case in which the plural connectors 24, 25, 26, 27 include these plural opposing connectors 24, 25, 26, there is a risk that the opposing connectors 24, 25, 26 will strongly contact the framework member 50 in the event of a vehicle collision and malfunctions such as short circuits will occur.

Here, in the present embodiment, the plural opposing connectors 24, 25, 26 include a first connector 24 that is in a non-energized state while the vehicle is traveling, and the first connector 24 is closer to the framework member 50 in the first direction than any of the opposing connectors 25, 26 excluding the first connector 24 among the plural opposing connectors 24, 25, 26.

Therefore, when the battery pack 20 moves in the first direction relative to the framework member 50 as a result of inertia at the time of a vehicle collision, the first connector 24 will hit the framework member 50 first. As a result, it is possible to suppress strong contact between the other opposing connectors 25, 26 and the framework member 50, and the occurrence of malfunctions such as short circuits can be suppressed.

Further, in the present embodiment, the first connector 24 is a DC charging connector.

Therefore, it is possible to suppress destruction of the first connector 24 when the first connector 24 contacts the framework member 50 in the event of a vehicle collision and, as a result, inertial movement of the battery pack 20 can be effectively suppressed. This is because a DC charging connector has a structure that can handle large currents and, therefore, is necessarily a high-strength connector.

Further, in the present embodiment, as shown in Fig. 3, the first connector 24 is provided with a first pack-side connector 24A fixed to the case 22, and a first vehicle-side connector 24B connected to the first pack-side connector 24A and fixed to the leading end of a cable 29. Here, the first vehicle-side connector 24B is provided at a position at which it would contact the framework member 50 when it is supposed that the first vehicle-side connector 24B moves in parallel with the first direction.

Therefore, when the battery pack 20 moves in the first direction relative to the framework member 50 as a result of inertia at the time of a vehicle collision, the first vehicle-side connector 24B is likely to contact the framework member 50. As a result, inertial movement of the battery pack 20 can be yet more effectively suppressed.

Further, the first direction in the present embodiment is the vehicle forward direction.

Therefore, the occurrence of malfunctions such as short circuits in the event of a frontal collision of the vehicle can be suppressed.

Further, in the present embodiment, as shown in Fig. 1, the framework member 50 is provided with a first framework member 51 extending in the vehicle front-rear direction and a second framework member 52 extending in the vehicle width direction. The first framework member 51 and the second framework member 52 are connected to each other.

Here, the first connector 24 is positioned at the vehicle rear side of the portion of the framework member 50 at which the first framework member 51 and the second framework member 52 are connected.

Therefore, load from the first connector 24 can be received by a portion of the framework member 50 that has high strength.

Further, in the present embodiment, as shown in Fig. 1, the first framework member 51 is one of a pair of front side members 51 having a vehicle front part extending in the vehicle front-rear direction, and the second framework member 52 is one of a pair of cross members 52 that are connected to the rear ends of the pair of front side members 51.

Therefore, the front side members 51 and the cross members 52 can be effectively utilized to suppress the occurrence of malfunctions in the event of a vehicle collision.

Further, in the present embodiment, as shown in Fig. 1, the vehicle lower part structure 10 is equipped with an exhaust pipe 80. The first connector 24 is located at a position offset from a central position in the vehicle width direction toward the one side in the vehicle width direction, and the exhaust pipe 80 passes between the pair of cross members 52 and also passes through a space at the other side of the battery pack 20 in the vehicle width direction.

Therefore, in a structure provided with the exhaust pipe 80, the battery pack 20 including the first connector 24, and the exhaust pipe 80, can be arranged efficiently.

Further, in the present embodiment, as shown in Fig. 1, the plural connectors 24, 25, 26, 27 include a non-opposing connector 27 in addition to the plural opposing connectors 24, 25, 26, and the non-opposing connector 27 is a connector that is connected to a vehicle drive motor.

Therefore, the connector connected to the vehicle drive motor can be disposed in a safer position.

In the foregoing, preferred embodiments of the present disclosure are explained; however, the present disclosure is not limited to the foregoing explanation.

In the above-described embodiments, as shown in Fig. 1, a portion of the cable 29 connected to the first connector 24 is arranged so as to extend in the vehicle width direction at a front side of the cross member main body part 52A. However, a portion of the cable 29 connected to the first connector 24 may be arranged so as to extend in the vehicle width direction at a rear side of the cross member main body part 52A. According to this kind of structure, when the battery pack 20 moves inertially toward the vehicle forward side in the event of a vehicle collision, a portion of the cable 29 can be sandwiched between the cross member main body part 52A and the first connector 24. As a result, there is the possibility that inertial movement of the battery pack 20 can be effectively suppressed.

### Explanation of Reference Numerals

- 10: Vehicle lower part structure
- 20: Battery pack
- 21: Battery
- 22: Case
- 24: First connector (extra-area connector, opposing connector)
- 24A: First pack-side connector
- 24B: First vehicle-side connector
- 25: Second connector (extra-area connector, opposing connector)
- 26: Third connector (extra-area connector, opposing connector)
- 27: Fourth connector (extra-area connector, non-opposing connector)
- 50: Framework member
- 51: Front side member (first framework member)
- 52: Cross member (second framework member)
- 80: Exhaust pipe
- 90: Vehicle cabin

## Claims

1. A battery pack installed at a lower side of a vehicle cabin, the battery pack comprising:
a battery;
a case housing the battery; and
a plurality of connectors,
wherein, when a specific direction among directions orthogonal to a vehicle vertical direction is a first direction, each of the plurality of connectors protrudes from the case toward a side of the first direction.

2. The battery pack of claim 1, wherein:
the plurality of connectors includes a first connector that is in a non-energized state during vehicle travel, and
the first connector protrudes further toward the side of the first direction than any connector, other than the first connector, among the plurality of connectors.

3. The battery pack of claim 1, wherein:
the first direction is a vehicle front direction or a vehicle rear direction,
the plurality of connectors includes a plurality of extra-area connectors disposed outside a vehicle width direction central region in a state in which the battery pack is installed in a vehicle,
the plurality of extra-area connectors includes a first connector that is in a non-energized state during vehicle travel, and
the first connector protrudes further toward the side of the first direction than any extra-area connector, other than the first connector, among the plurality of extra-area connectors.

4. A vehicle lower part structure, comprising:
the battery pack of claim 1; and
a framework member, wherein:
the plurality of connectors includes a plurality of opposing connectors provided at a position at which the opposing connectors can contact the framework member when the battery pack moves relative to the framework member in the first direction as a result of inertia at a time of a vehicle collision,
the plurality of opposing connectors includes a first connector that is in a non-energized state during vehicle travel, and
the first connector is closer to the framework member in the first direction than any opposing connector, other than the first connector, among the plurality of opposing connectors.

5. The vehicle lower part structure of claim 4, wherein the first connector is a DC charging connector.

6. The vehicle lower part structure of claim 4, wherein:
the first connector comprises:
a first pack-side connector fixed to the case; and
a first vehicle-side connector connected to the first pack-side connector and fixed to a leading end of a cable, and
the first vehicle-side connector is provided at a position at which the first vehicle-side connector would contact the framework member when it is supposed that the first vehicle-side connector moves in parallel with the first direction.

7. The vehicle lower part structure of claim 4, wherein the first direction is a vehicle front direction.

8. The vehicle lower part structure of claim 7, wherein:
the framework member comprises:
a first framework member extending in a vehicle front-rear direction; and
a second framework member extending in a vehicle width direction,
the first framework member and the second framework member are connected, and
the first connector is positioned at a vehicle rearward side of a portion of the framework member at which the first framework member and the second framework member are connected.

9. The vehicle lower part structure of claim 8, wherein:
the first framework member is one of a pair of front side members having a vehicle front part extending in the vehicle front-rear direction, and
the second framework member is one of a pair of cross members connected to rear ends of the pair of front side members.

10. The vehicle lower part structure of claim 7, wherein:
the framework member comprises:
a first framework member extending in a vehicle front-rear direction; and
a second framework member extending in a vehicle width direction,
the first framework member and the second framework member are connected,
the first framework member is one of a pair of front side members having a vehicle front part extending in the vehicle front-rear direction,
the second framework member is one of a pair of cross members connected to rear ends of the pair of front side members,
the vehicle lower part structure comprises an exhaust pipe,
the first connector is positioned at a position that is offset from a vehicle width direction central position toward one side in the vehicle width direction, and
the exhaust pipe passes between the pair of cross members and passes through a space at another side in the vehicle width direction relative to the battery pack.

11. The vehicle lower part structure of claim 4, wherein:
the plurality of connectors include a non-opposing connector in addition to the plurality of opposing connectors, and
the non-opposing connector is a connector that is connected to a vehicle drive motor.
